# EUROPEAN PATENT SPECIFICATION

(11) **EP 0 446 905 B1**
(45) Date of publication and mention of the grant of the patent: **08.06.1994**
(21) Application number: 91103862.8
(22) Date of filing: 13.03.1991
(51) Int. Cl.: H02P 3/24, B66B 1/30

(54) **Procedure and apparatus for braking a squirrel-cage elevator motor fed by a frequency converter in fault situations**
Verfahren und Gerät zur Bremsung eines Kurzschlussläufer-Aufzugsmotors bei Störungsfällen, gespeist von einem Frequenzwandler
Procédé et appareil pour freiner un moteur à cage d'écureuil pour élévateur alimenté par un convertisseur de fréquence, en cas d'erreur

(30) Priority: 13.03.1990 FI 901249
(43) Date of publication of application: 18.09.1991
(73) Proprietor: KONE Elevator GmbH, 6340 Baar (CH)
(72) Inventor: Hakala, Harri, SF-05830 Hyvinkää (FI)
(74) Representative: Zipse + Habersack

(56) References cited:
- DD-A- 0 109 597
- US-A- 4 378 059
- US-A- 4 736 146
- US-A- 4 815 567

## Description

The present invention relates to a procedure for braking a squirrel-cage elevator motor fed by a frequency converter in fault situations, as defined in the introductory part of claim 1 and an apparatus as defined in the introductory part of claim 5.

In certain countries, the elevator regulations stipulate that gearless elevators should be capable of so-called "dynamic braking", which means that it must be possible even in exceptional situations to decelerate the elevator by means of its motor; for instance in the event of failure of the brake arms, the motor must be able to reduce the speed of the elevator car.

In the d.c. drives currently used, this problem has been solved by connecting a resistor to the armature winding in failure situations, enabling the motor to brake by acting as a generator. The regulations generally assume that the main circuit is inoperative or inaccessible, preventing normal motor action. In the case of an elevator with a squirrel-cage motor, a corresponding procedure cannot be applied because without its main cirucuit the motor will not be magnetized and therefore cannot generate a torque.

In the present invention, dynamic braking of a frequency converter-fed gearless elevator is achieved as stated in claims 1 and 5 to follow by connecting a d.c. voltage source, such as a battery, directly to the motor windings. This enables the motor to act as an eddy-current brake, reducing the car speed to an acceptable value.

The invention provides the following advantages:

The preferred embodiment of the invention is cheap to implement because the battery is an advantageous means of producing a large current. For instance an ordinary automobile starting battery can deliver a current of several hundreds of amperes. Moreover, since the battery is not used continuously, it is possible to use a cheap starter-type battery. Besides, an elevator is provided with batteries in any case, e.g. to feed emergency lighting devices etc., which means that the maintenance of the braking batteries will not involve much extra work.

Moreover, batteries are fully operable without a mains supply. An A.C. motor needs at least a magnetizing current.

Using the apparatus of the invention does not require any changes to the frequency converter itself, so it is easy to add to an elevator system if necessary.

Since the battery is not used continuously, a charger with a very low current rating can be used, thus lowering the cost. It is also possible to omit the charger altogether if the battery is replaced e.g. in conjunction with regular maintenance operations. It can be recharged at a service location and changed again during the next servicing.

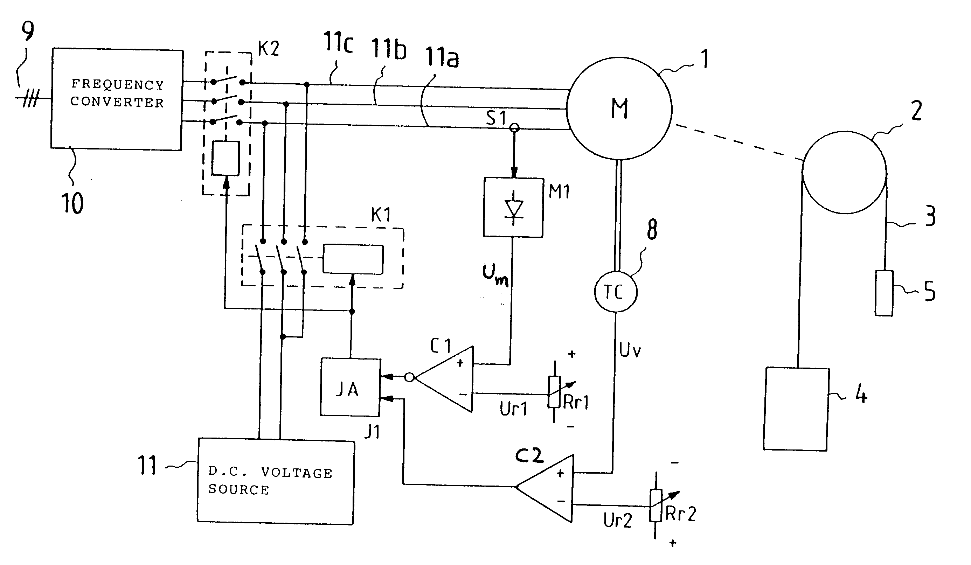

In the following, the invention is described in detail by the aid of an example by referring to the attached drawing, representing the apparatus of the invention for dynamic braking of an elevator.

The elevator has a three-phase squirrel-cage motor (M) 1, which rotates a traction sheave 2. By means of a lifting rope 3, the traction sheave transmits the motion to the elevator car 4 and counterweight 5 suspended at the ends of the rope. The motor speed is measured by means of a tachometer generator (TC) 8. The motor is fed via a frequency converter 10 connected to a three-phase mains network 9. For the detection of fault situations, the elevator is provided with a current sensor S1 connected to one 11a of the motor supply conductors and measuring the phase current of the motor. Three-phase measurement can also be used. The signal from the sensor is applied to a signal processing device M1, which rectifies and filters it so as to produce a d.c. voltage Um proportional to the motor current. This voltage is passed to a comparator C1, whose other input is fed by a reference voltage Ur1 obtained from a variable resistor Rr1. The reference voltage is so selected that, if the motor current exceeds the nominal magnetizing current, the inverted output of comparator C1 will be in the "0" state.

The voltage Uv from the tachometer 8 is fed into comparator C2, whose reference voltage Ur2, obtained from variable resistor Rr2, is so selected that it approximately corresponds to the value of the nominal slip of the motor.

The signals from the two comparators are applied to the inputs of an AND circuit J1, whose state is "1" if the elevator speed exceeds the value (about 7 - 15 % of the maximum speed) corresponding to the nominal slip and no nominal magnetizing current is flowing in the motor.

If the output of comparator J1 is "1", this is regarded as a fault situation and the contactor K1 of the battery 11 used as d.c. voltage source is closed, causing the d.c. voltage source to be connected to the motor supply conductors 11a - 11c (one of the battery terminals being connected to one conductor while the other terminal is connected to the other two conductors). Simultaneously, the normal supply via the frequency converter must be disconnected by means of another contactor K2 to avoid damage.

The voltage level of the d.c. source must be so selected that the direct current is approximately equal to the nominal motor current. In this case the elevator speed will be limited to the value corresponding to the nominal slip of the motor if the car is empty or carrying a nominal load. Otherwise the speed will be lower. After the fault has been detected, the d.c. source will remain connected until the car or the counterweight reaches the buffer. If the braking reduces the elevator speed below the value determined by the reference value Ur2, the d.c. source will be disconnected and the elevator will continue falling, but there is no harm in this because the d.c. source will be reconnected as the speed increases.

Since the direct current is of a magnitude equal to the nominal current, the motor losses are also close to the nominal values, which means that the motor temperature will not rise above the normal level.

It is obvious to a person skilled in the art that different embodiments of the invention are not restricted to the example described above, but that they may instead be varied within the scope of the following claims.

## Claims

1. Procedure for braking a squirrel-cage elevator motor (1) fed by a frequency converter (10) in fault situations using a direct current supplied from a d.c. voltage source (11), in which procedure the current in at least one of the motor phases and the rotational speed of the motor are measured, and in which procedure the supply of direct current is controlled by means of a switching device (K1), **characterized** in that, when the motor speed exceeds the value corresponding to the nominal slip and the motor current is less than the nominal magnetizing current, the switching device (K1) is caused to connect a direct current from the d.c. voltage source (11) to the motor.

2. Procedure according to claim 1, in which the motor phase current is measured by means of a current sensing element (S1), the current signal provided by said element being used to produce a voltage (Um) proportional to the phase current, **characterized** in that the voltage (Um) is compared in a comparator circuit (C1) to a reference value (Ur1) corresponding to the nominal magnetizing current of the motor.

3. Procedure according to claim 1 or 2, in which the rotational speed of the motor is measured by means of a device (8) measuring the rotational speed of the motor and providing a voltage (Uv) proportional to the rotational speed of the motor, **characterized** in that the voltage (Uv) is compared in a comparator circuit (C2) to a reference value (Ur2) corresponding to the nominal motor slip.

4. Procedure according to any one of the preceding claims, **characterized** in that the d.c. voltage source consists of at least one battery.

5. Apparatus implementing the procedure of claim 1 for braking a squirrel-cage elevator motor (1) fed by a frequency converter (10) in fault situations using a direct current supplied from a d.c. voltage source (11), said apparatus comprising a switching device (K1) for the control of the supply of direct current, at least one current sensing element (S1) for measuring the phase current of the motor, at least one processing device (S1) producing a voltage (Um) proportional to the phase current from the current signal, and a device (8) measuring the rotational speed of the motor and providing a voltage (Uv) corresponding to the rotational speed of the motor, **characterized** in that the apparatus is provided with at least one comparator circuit (C1) which compares the voltage (Um) proportional to the phase current to a reference value (Ur1) corresponding to the nominal magnetizing current of the motor, another comparator circuit (C2) which compares the voltage (Uv) corresponding to the rotational speed of the motor to a reference value (Ur2) corresponding to the nominal slip of the motor, and a control unit (J1) which, when the elevator speed exceeds the value corresponding to the nominal slip and the motor current is less than the nominal magnetizing current, causes the switching device (K1) to connect a direct current from the d.c. voltage source (11) to the motor.

6. Apparatus according to claim 5, provided with another switching device (K2) placed between the frequency converter (10) and the motor (1), **characterized** in that the control unit (J1) causes the other switching device (K2) to disconnect the frequency converter from the motor at the same time when it causes the switching device (K1) to connect a direct current from the d.c. voltage source (11) to the motor.

7. Apparatus according to claim 5 or 6, **characterized** in that the d.c. voltage source consists of one or more batteries.

## Revendications

1. Procédé de freinage d'un moteur à cage d'écureuil pour ascenseur (1), alimenté par un convertisseur de fréquence (10), utilisant dans des situations d'incident un courant continu fourni par une source de tension continue (11), dans lequel le courant dans au moins l'une des phases du moteur et la vitesse de rotation du moteur sont mesurés, et dans lequel l'alimentation en courant continu est commandée au moyen d'un dispositif de commutation (K1), caractérisé en ce que, lorsque la vitesse du moteur dépasse la valeur correspondant au glissement nominal et lorsque le courant dans le moteur est inférieur au courant de magnétisant nominal, le dispositif de commutation (K1) est amené à fournir au moteur un courant continu venant de la source de tension continue (11).

2. Procédé selon la revendication 1, dans lequel le courant de phase du moteur est mesuré au moyen d'un élément de détection de courant (S1), le signal de courant fourni par ledit élément servant à produire une tension (Um) proportionnelle au courant de phase, caractérisé en ce que la tension (Um) est comparée dans un circuit comparateur (C1) à une valeur de référence (Ur 1) correspondant au courant magnétisant nominal du moteur.

3. Procédé selon la revendication 1 ou 2, dans lequel la vitesse de rotation du moteur est mesurée au moyen d'un dispositif (8) qui mesure la vitesse de rotation du moteur et qui fournit une tension (Uv) proportionnelle à la vitesse de rotation du moteur, caractérisé en ce que la tension (Uv) est comparée, dans un circuit comparateur (C2) à une valeur de référence (Ur2) correspondant au glissement nominal du moteur.

4. Procédé selon l'une quelconque des revendications précédentes, caractérisé en ce que la source de tension continue consiste en au moins une batterie.

5. Appareil mettant en oeuvre le procédé de la revendication 1 pour freiner un moteur à cage d'écureuil pour ascenseur (1), alimenté par un convertisseur de fréquence (10) et utilisant dans des situations d'incident, un courant continu fourni à partir d'une source de tension continue (11), ledit appareil comprenant un dispositif de commutation (K1) pour la commande de l'alimentation en courant continu, au moins un élément de détection de courant (S1) pour mesurer le courant de phase du moteur, au moins un dispositif de traitement (M1) produisant une tension (Um) proportionnelle au courant de phase à partir du signal de courant, et un dispositif (8) mesurant la vitesse de rotation du moteur et fournissant une tension (Uv) correspondant à la vitesse de rotation du moteur, caractérisé en ce que l'appareil est muni d'au moins un circuit comparateur (C1) qui compare la tension (Um), proportionnelle au courant de phase, à une valeur de référence (Ur1) correspondant au courant magnétisant nominal du moteur, un autre circuit comparateur (C2), qui compare la tension (Uv), correspondant à la vitesse de rotation du moteur, à une valeur de référence (Ur2) correspondant au glissement nominal du moteur, et une unité de commande (J1) qui, lorsque la vitesse de l'ascenseur dépasse la valeur correspondant au glissement nominal et que le courant dans le moteur est inférieur au courant magnétisant nominal, amène le dispositif de commutation (K1) à fournir au moteur un courant continu venant de la source de tension continue (11).

6. Appareil selon la revendication 5, comportant un autre dispositif de commutation (K2) placé entre le convertisseur de fréquence (10) et le moteur (1), caractérisé en ce que l'unité de commande (J1) amène l'autre dispositif de commutation (K2) à déconnecter le convertisseur de fréquence par rapport au moteur, au moment où elle amène le dispositif de commutation (K1) à fournir au moteur un courant continu venant de la source de tension continue (11).

7. Appareil selon la revendication 5 ou 6, caractérisé en ce que la source de tension continue consiste en une ou plusieurs batterie(s).

## Patentansprüche

1. Verfahren zum Abbremsen eines durch einen Frequenzwandler (10) gespeisten Kurzschlußläufer-Aufzugmotors (1) in Störsituationen unter Verwendung eines von einer Gleichspannungsquelle (11) erhaltenen Gleichstroms, bei welchem Verfahren der Strom in zumindest einer der Motorphasen und die Rotationsgeschwindigkeit des Motors gemessen werden und bei welchem Verfahren die Gleichstromzufuhr mittels einer Schalteinrichtung (K1) gesteuert wird,
dadurch **gekennzeichnet**,
daß, wenn die Motorgeschwindigkeit den dem Nominalschlupf entsprechenden Wert überschreitet und der Motorstrom geringer als der nominale Magnetisierungsstrom ist, die Schalteinrichtung (K1) veranlaßt wird, einen Gleichstrom von der Gleichspannungsquelle (11) mit dem Motor zu verbinden.

2. Verfahren nach Anspruch 1, bei dem der Phasenstrom des Motors mittels eines Stromsensorelements (S1) gemessen wird, wobei das durch dieses Element erhaltene Stromsignal verwendet wird, um eine Spannung (Um) proportional zum Phasenstrom zu erzeugen,
dadurch **gekennzeichnet,**
daß die Spannung (Um) in einem Komparator (C1) mit einem Referenzwert (Ur1) verglichen wird, der dem nominalen Magnetisierungsstrom des Motors entspricht.

3. Verfahren nach Anspruch 1 oder 2, bei dem die Rotationsgeschwindigkeit des Motors mittels einer Einrichtung (8) gemessen wird, die die Rotationsgeschwindigkeit des Motors mißt und eine zur Rotationsgeschwindigkeit des Motors proportionale Spannung (Uv) bereitstellt,
dadurch **gekennzeichnet,**
daß die Spannung (Uv) in einem Komparator (C2) mit einem Referenzwert (Ur2) verglichen wird, der dem Nominalschlupf des Motors entspricht.

4. Verfahren nach einem der vorhergehenden Ansprüche,
dadurch **gekennzeichnet,**
daß die Gleichspannungsquelle aus mindestens einer Batterie besteht.

5. Vorrichtung zur Implementierung des Verfahrens nach Anspruch 1 zum Abbremsen eines von einem Frequenzwandler (10) gespeisten Kurzschlußläufer-Aufzugmotors (1) in Störsituationen unter Verwendung eines von einer Gleichspannungsquelle (11) erhaltenen Gleichstroms, wobei die Vorrichtung eine Schalteinrichtung (K1) zur Steuerung der Gleichstromversorgung, zumindest ein Stromsensorelement (S1) zum Messen des Phasenstroms des Motors, zumindest eine Verarbeitungseinrichtung (M1), die eine zum Phasenstrom von dem Stromsignal proportionale Spannung (Um) erzeugt, und eine Einrichtung (8) zur Messung der Rotationsgeschwindigkeit des Motors und Bereitstellung einer der Rotationsgeschwindigkeit des Motors entsprechenden Spannung (Uv) enthält,
**gekennzeichnet** durch,
zumindest einen Komparator (C1), der die zum Phasenstrom proportionale Spannung (Um) mit einem Referenzwert (Ur1) vergleicht, der dem nominalen Magnetisierungsstrom des Motors entspricht, einen anderen Komparator (C2), der die der Rotationsgeschwindigkeit des Motors entsprechende Spannung (Uv) mit einem Referenzwert (Ur2) vergleicht, der dem Nominalschlupf des Motors entspricht, und
eine Steuerungseinheit (J1), welche, wenn die Aufzuggeschwindigkeit den dem Nominalschlupf entsprechenden Wert überschreitet und der Motorstrom geringer als der nominale Magnetisierungsstrom ist, die Schalteinrichtung (K1) dazu veranlaßt, einen Gleichstrom von der Gleichspannungsquelle (11) mit dem Motor zu verbinden.

6. Vorrichtung nach Anspruch 5, die mit einer weiteren Schalteinrichtung (K2) versehen ist, die zwischen dem Frequenzwandler (10) und dem Motor (1) angeordnet ist,
dadurch **gekennzeichnet,**
daß die Steuerungseinheit (J1) die andere Schalteinrichtung (K2) dazu veranlaßt, den Frequenzwandler von dem Motor zur gleichen Zeit abzutrennen, in der sie die Schalteinrichtung (K1) dazu veranlaßt, den Gleichstrom von der Gleichspannungsquelle (11) mit dem Motor zu verbinden.

7. Vorrichtung nach Anspruch 5 oder 6,
dadurch **gekennzeichnet**,
daß die Gleichspannungsquelle aus einer oder mehreren Batterien besteht.
